(19) Europäisches Patentamt

European Patent Office

Office européen des brevets

(11) **EP 3 732 466 B1**

(12) **FASCICULE DE BREVET EUROPEEN**

(45) Date de publication et mention de la délivrance du brevet:
**16.02.2022 Bulletin 2022/07**

(21) Numéro de dépôt: **18852716.2**

(22) Date de dépôt: **21.12.2018**

(51) Classification Internationale des Brevets (IPC):
**G01N 21/27** (2006.01)  **G01N 21/65** (2006.01)

(52) Classification Coopérative des Brevets (CPC):
**G01N 21/65; G01N 21/274**

(86) Numéro de dépôt international:
**PCT/FR2018/053526**

(87) Numéro de publication internationale:
**WO 2019/129982 (04.07.2019 Gazette 2019/27)**

(54) **PROCÉDÉ DE DÉTERMINATION D'UN DEGRÉ DE POLYMÉRISATION D'UN POLYMÈRE**

VERFAHREN ZUR BESTIMMUNG EINES POLYMERISATIONSGRADES EINES POLYMERS

METHOD FOR DETERMINING A DEGREE OF POLYMERIZATION OF A POLYMER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.12.2017 FR 1763332**

(43) Date de publication de la demande:
**04.11.2020 Bulletin 2020/45**

(73) Titulaires:
- **COMMISSARIAT À L'ÉNERGIE ATOMIQUE ET AUX ÉNERGIES ALTERNATIVES**
  **75015 Paris (FR)**
- **ROQUETTE FRERES**
  **62136 Lestrem (FR)**

(72) Inventeurs:
- **BERGMANN, Emeric**
  **38000 Grenoble (FR)**
- **BARITAUX, Jean-Charles**
  **38170 Seyssinet-Pariset (FR)**
- **BOIT, Baptiste**
  **59253 La Gorgue (FR)**
- **LECOCQ, Aline**
  **59420 Mouvaux (FR)**
- **REBUFFEL, Véronique**
  **38700 Corenc (FR)**
- **TOURE, Oumar**
  **62400 Béthune (FR)**
- **IBERT, Mathias**
  **59930 La Chapelle d'Armentières (FR)**

(74) Mandataire: **Le Goaller, Christophe**
**Innovation Competence Group**
**310 avenue Berthelot**
**69372 Lyon Cedex 08 (FR)**

(56) Documents cités:
**WO-A1-2012/088217     US-B1- 6 723 804**

- **E. DROPSIT ET AL: "On the exploitation of optical signal from Raman spectroscopy for in-situ conversion monitoring of emulsion polymerization", AIP CONFERENCE PROCEEDINGS, vol. 1914, 14 décembre 2017 (2017-12-14), page 090006, XP055478148, NEW YORK, US ISSN: 0094-243X, DOI: 10.1063/1.5016752 cité dans la demande**
- **REHMAN I ET AL: "In situ analysis of the degree of polymerization of bone cement by using FT-Raman spectroscopy", BIOMATERIALS, ELSEVIER SCIENCE PUBLISHERS BV., BARKING, GB, vol. 17, no. 16, août 1996 (1996-08), pages 1615-1619, XP004032968, ISSN: 0142-9612, DOI: 10.1016/0142-9612(95)00240-5**
- **DUSTIN WILSON ET AL: "Effects of different preparation procedures during tooth whitening on enamel bonding", JOURNAL OF MATERIALS SCIENCE: MATERIALS IN MEDICINE, KLUWER ACADEMIC PUBLISHERS, BO, vol. 20, no. 4, 13 décembre 2008 (2008-12-13), pages 1001-1007, XP019680199, ISSN: 1573-4838**

EP 3 732 466 B1

- **VÄNSKÄ EMILIA ET AL: "Effect of water vapor in air on thermal degradation of paper at high temperature", POLYMER DEGRADATION AND STABILITY, BARKING, GB, vol. 99, 9 novembre 2013 (2013-11-09), pages 283-289, XP028670914, ISSN: 0141-3910, DOI: 10.1016/J.POLYMDEGRADSTAB.2013.10.020**

**Description**

**DOMAINE TECHNIQUE**

Le domaine technique de l'invention est une méthode de détermination d'un degré de polymérisation d'un polymère, en particulier un polymère de glucose, mettant en œuvre une analyse par spectrométrie Raman.

**ART ANTERIEUR**

L'amidon est un bio polymère naturel synthétisé par les végétaux. Il est l'un des matériaux de la biomasse les plus abondants dans la nature. Il s'agit d'un polysaccharide de formule $(C_6H_{10}O_5)_n$ dont le monomère est l'isomère D (dextrogyre) du glucose.

L'hydrolyse de l'amidon permet d'obtenir des produits destinés à l'industrie agroalimentaire. Plus précisément, elle peut permettre d'obtenir des malto-dextrines, des sirops de glucose liquides, des solutions de glucose déshydratées, se présentant sous la forme de poudres sèches, en particulier des poudres blanches. Ces produits peuvent être utilisés comme source de glucides, à usage diététique, par exemple pour l'alimentation infantile ou sportive. Ils peuvent être également utilisés pour des applications liées à la fermentation, par exemple dans le domaine de la boulangerie ou de la brasserie. D'autres utilisations concernent la confection de produits alimentaires, par exemple, et de façon non exhaustive, les biscuits, la confiserie, la charcuterie ou les édulcorants. Ces produits peuvent également être utilisés en tant qu'agent texturant d'un produit alimentaire.

Les propriétés des produits de l'hydrolyse de l'amidon dépendent du degré d'hydrolyse. Ce dernier peut être exprimé par un indicateur désigné par l'acronyme DE, signifiant Dextrose Equivalent, que l'on peut traduire par équivalent en dextrose. Le dextrose pur, obtenu après hydrolyse totale de l'amidon, présente un DE égal à 0. Les malto-dextrines présentent un équivalent en dextrose inférieur à ou égal à 20, tandis que les sirops de glucose présentent un équivalent en dextrose compris entre 20 et 100. Les propriétés des produits dépendent de leur degré d'hydrolyse C'est pourquoi il est utile de contrôler l'hydrolyse de l'amidon, de façon à maîtriser l'équivalent en dextrose des produits de l'hydrolyse.

L'équivalent en dextrose est usuellement exprimé en grammes de D-glucose anhydre pour 100 grammes de matière sèche. Le D-glucose est usuellement désigné par le terme dextrose. Au cours de l'hydrolyse de l'amidon, le degré de polymérisation DP diminue peu à peu, tandis que l'équivalent dextrose DE augmente peu à peu, traduisant l'obtention de molécules courtes. Ainsi, l'équivalent en dextrose traduit le degré de conversion d'amidon en dextrose. Il dépend également du degré de polymérisation, le degré de polymérisation (DP) étant d'autant plus élevé que l'équivalent en dextrose DE est faible.

L'équivalent en dextrose peut être déterminé par des analyses chimiques ou électrochimiques, telles que décrites par exemple dans le document EP0451811.

Des méthodes par spectroscopie Raman ont déjà été mises en œuvre pour étudier les spectres de molécules composant l'amidon. L'objectif de ces études était d'établir une signature Raman de molécules, en établissant des corrélations entre la position de différents pics de spectres Raman, ou de leurs intensités relatives avec des états moléculaire particuliers.

Les documents US6723804 et WO2012088217 décrivent le recours à la spectrométrie Raman pour suivre des procédés de polymérisation, en se basant sur le suivi d'intensités de pics dont la position est prédéfinie.

Par ailleurs, la publication de Dropsit E. et al. : "On the exploitation of optical signal from Raman spectroscopy for in-situ conversion monitoring of emulsion polymerization", AIP conférence proceedings, vol. 1914, page 090006, 14 Décembre 2017, décrit un procédé de suivi d'une polymérisation de styrène.

Cela se traduit par une diminution de l'amplitude d'un pic représentatif du styrène (999 cm$^{-1}$) et d'une augmentation de l'amplitude d'un pic représentatif de polystyrène (1001 cm$^{-1}$). Ces pics ne sont pas séparés par le détecteur utilisé. Ainsi, ils forment un pic apparent, qui se décale en fonction des proportions relatives de styrène et de polystyrène. Les pics considérés sont spécifiques du monomère et du polymère considéré.

Les inventeurs ont mis au point une méthode permettant une estimation de l'équivalent dextrose d'un produit issu de l'hydrolyse de l'amidon. Plus généralement, la méthode développée permet une estimation d'un degré de polymérisation d'un produit contenu dans l'échantillon. Elle est particulièrement aisée à mettre en œuvre dans des applications de type contrôle de procédé industriel.

**EXPOSE DE L'INVENTION**

Un premier objet de l'invention est un procédé de détermination d'un degré de polymérisation d'un polymère, contenu dans un échantillon, comportant les étapes suivantes:

a) illumination de l'échantillon à l'aide d'un faisceau laser et obtention d'un spectre Raman représentatif de l'échantillon;

b) identification d'un pic d'intérêt et détermination d'une position du pic d'intérêt sur le spectre ;

c) à partir de la position du pic d'intérêt, utilisation d'une fonction de calibration pour déterminer un degré de polymérisation du polymère, la fonction de calibration traduisant une évolution de la position du pic d'intérêt en fonction du degré de polymérisation du polymère;

le procédé étant tel que le pic d'intérêt est situé dans une bande spectrale s'étendant entre 2800 cm$^{-1}$ et 3020 cm$^{-1}$.

La position du pic d'intérêt peut notamment être une position d'un sommet du pic d'intérêt sur le spectre. Il peut également s'agir d'une borne du pic d'intérêt.

De préférence, la fonction de calibration établit une relation entre la position du pic d'intérêt et le degré de polymérisation du polymère. La relation est de préférence bijective.

La fonction de calibration peut dépendre des conditions expérimentales, et notamment du taux de matière sèche dans l'échantillon et/ou de la température.

L'étape b) peut comporter, préalablement à la détermination de la position du pic d'intérêt, un traitement du spectre Raman, comportant au moins l'une des opérations suivantes :

- lissage du spectre Raman, pour obtenir un spectre Raman lissé;
- extraction d'une ligne de base et soustraction de cette dernière au spectre Raman ou au spectre Raman lissé;
- prise en compte d'une fonction d'ajustement paramétrique et ajustement du pic d'intérêt selon la fonction d'ajustement paramétrique, puis détermination de la position du pic d'intérêt ainsi ajusté.

Le traitement du spectre Raman peut comporter une prise en compte d'une fonction d'ajustement statistique paramétrique ainsi qu'un ajustement du pic d'intérêt selon cette dernière. La fonction d'ajustement peut être par exemple de type gaussienne ou lorentzienne. La détermination d'un paramètre de la fonction d'ajustement permet d'établir la position du pic d'intérêt.

Selon un mode de réalisation, le polymère est un polymère de glucose, et plus précisément de D-glucose, ou dextrose. Il peut s'agir d'un produit dérivé de l'hydrolyse de l'amidon, auquel cas le procédé permet un suivi de l'hydrolyse de l'amidon. Le degré de polymérisation déterminé peut être exprimé par un index, dit équivalent dextrose, représentant une quantité de dextrose présente dans l'échantillon relativement à une quantité de matière sèche présente dans l'échantillon.

Selon l'invention, le pic d'intérêt est situé dans une bande spectrale s'étendant entre 2800 cm$^{-1}$ et 3020 cm$^{-1}$. Il peut s'étendre selon les bandes spectrales 2850 cm$^{-1}$ - 2940 cm$^{-1}$, ou 2940 cm$^{-1}$ - 2980 cm$^{-1}$, ou 2980 cm$^{-1}$ - - 3010 cm$^{-1}$.

Le procédé peut comporter une acquisition de plusieurs spectres Raman successifs, ces derniers étant additionnés pour obtenir le spectre Raman représentatif de l'échantillon.

La fonction de calibration peut être obtenue en mettant en œuvre les étapes a) et b) en utilisant successivement des échantillons de calibration dont le degré de polymérisation est connu.

Un deuxième objet de l'invention est un dispositif, pour déterminer un degré de polymérisation d'un polymère, le dispositif comportant :

- une source de lumière, notamment une source laser, configurée pour diriger un faisceau lumineux vers un échantillon comprenant le polymère ;
- un spectromètre, configuré pour acquérir un spectre Raman de l'échantillon sous l'effet de son illumination par le faisceau lumineux ;
- un processeur, configuré pour mettre en oeuvre les étapes b) et c) d'un procédé selon le premier objet de l'invention, à partir du spectre Raman acquis par le spectromètre;

le procédé étant tel que le pic d'intérêt est situé dans une bande spectrale s'étendant entre 2800 cm$^{-1}$ et 3020 cm$^{-1}$.

D'autres avantages et caractéristiques ressortiront plus clairement de la description qui va suivre de modes particuliers de réalisation de l'invention, donnés à titre d'exemples non limitatifs, et représentés sur les figures listées ci-dessous.

## **FIGURES**

La figure 1 représente le schéma d'un dispositif permettant une mise en oeuvre de l'invention.

La figure 2A montre un spectre Raman acquis à partir d'un échantillon dont l'index DE (Dextrose Equivalent) est égal à 100.

La figure 2B illustre différents traitements du spectre Raman représenté sur la figure 2A.

La figure 2C montre une région d'intérêt du spectre Raman traité.

La figure 2D montre l'évolution d'un pic d'intérêt en fonction de l'index DE de différents échantillons.

La figure 2E est une courbe représentant l'évolution d'une position su sommet des pics d'intérêt représentés sur la figure 2D, en fonction de l'index DE.

La figure 3A schématise les principales étapes d'un procédé selon l'invention.

La figure 3B montre un exemple d'utilisation d'une fonction de calibration.

Les figures 4A et 4C montrent des régions d'intérêt de spectres Raman acquis sur différents échantillons comportant du polyvinyle d'alcool ayant différents degrés de polymérisation. Les figures 4B et 4D sont des détails des régions d'intérêt respectivement représentées sur les figures 4A et 4C.

## EXPOSE DE MODES DE REALISATION PARTICULIERS

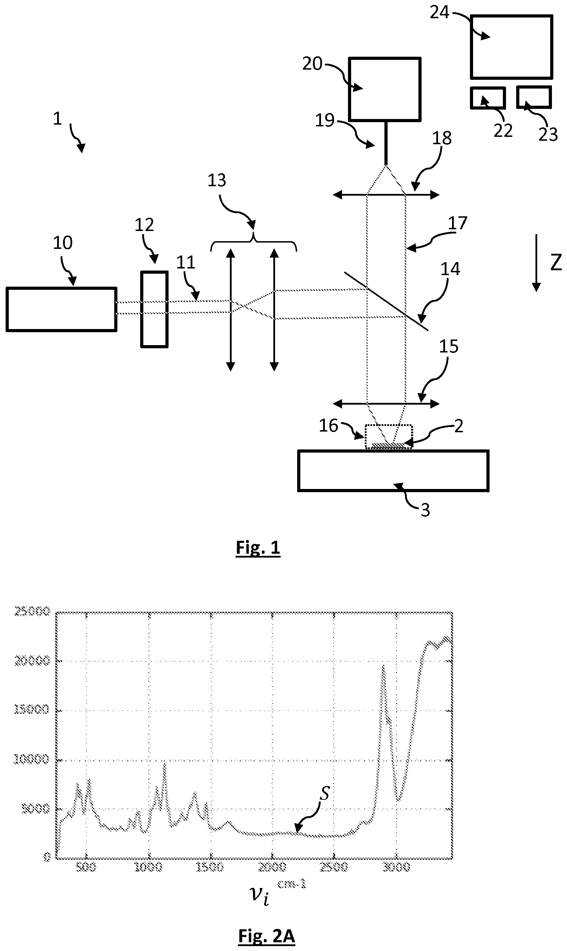

La figure 1 est un exemple de réalisation d'un dispositif 1 permettant la mise en œuvre de l'invention. Une source de lumière laser 10, par exemple de type Hélium Néon, est configurée pour générer un faisceau d'illumination 11, de préférence monochromatique, se propageant jusqu'à un échantillon 2 à analyser, l'échantillon étant disposé sur un support 3. Le faisceau d'illumination est atténué par une densité optique 12, puis est élargi par un système optique 13, comportant deux lentilles, avant d'être réfléchi par une lame 14 vers l'échantillon 2, selon un axe de propagation Z. Un objectif 15 permet une focalisation du faisceau d'illumination 11 sur l'échantillon. Sous l'effet de l'illumination par le faisceau d'illumination 11, l'échantillon génère un rayonnement lumineux de réponse 17. Le rayonnement de réponse 17 est un rayonnement diffusé par l'échantillon, en particulier par le processus usuellement appelé diffusion Raman spontanée. Dans cet exemple, le rayonnement de réponse se propage selon l'axe Z, dans un sens opposé au faisceau d'illumination 11.

La spectrométrie Raman est un outil de caractérisation très répandu, basé sur l'acquisition d'un spectre d'un rayonnement diffusé, de façon inélastique, par un échantillon, l'échantillon étant exposé à un rayonnement lumineux monochromatique incident. Un spectre Raman est généralement représenté sous la forme d'un spectre. Il représente un histogramme d'un nombre d'onde v dit différentiel, représentant une différence entre le nombre d'onde $v_{17}$ du rayonnement de réponse 17 détecté par rapport au nombre d'onde $v_{11}$ du faisceau d'illumination 11. Le nombre d'onde différentiel v correspond au terme anglosaxon "Raman shift". Ce spectre, dit spectre Raman, représente une signature des liaisons vibrationnelles atomiques des molécules composant l'échantillon analysé.

Dans l'exemple représenté sur la figure 1, le rayonnement de réponse 17 est transmis par la lame 14 vers une optique de focalisation 18. Il converge vers une fibre optique 19, cette dernière étant reliée à un photodétecteur spectrométrique 20, apte à en acquérir un spectre de diffusion Raman. Dans cet exemple, le photodétecteur 20 est un spectromètre Raman fourni par Tornado Spectral Systems sous la référence HyperFluxU1. Il est relié à un processeur 22, par exemple un microprocesseur, permettant la mise en oeuvre des instructions du procédé décrit ci-après. Le microprocesseur est relié à une mémoire 23 dans laquelle ces instructions sont stockées. Il peut également être relié à un écran d'affichage 24.

Selon une variante, le dispositif peut comporter une unité de régulation de la température 16 de l'échantillon, comportant un capteur de température, par exemple un thermocouple, et un moyen de chauffage, par exemple une résistance ou une plaque chauffante, de façon à maîtriser la température de l'échantillon 2. Il s'agit de la maintenir à ou proche d'une température de consigne.

Les inventeurs ont effectué des acquisitions de spectre Raman sur différents échantillons résultant d'une hydrolyse enzymatique d'amidon. Chaque échantillon présente un équivalent dextrose DE connu et n'évoluant pas. Les échantillons se présentent soit sous la forme d'une poudre, soit sous la forme de sirops. Les échantillons sous la forme d'une poudre ou de sirops sont dilués dans de l'eau déionisée avant d'être analysés. Il est préférable que le taux de matière sèche des échantillons soit maîtrisé. Dans les essais décrits ci-après, le taux de matière sèche des échantillons est de 30%.

La figure 2A montre un exemple de spectre Raman $S$ d'un échantillon de type dextrose monohydratée, dont le DE est égal à 100%. Avant d'exploiter le spectre, il est préférable d'effectuer un prétraitement, comprenant des opérations connues de l'homme du métier, en particulier :

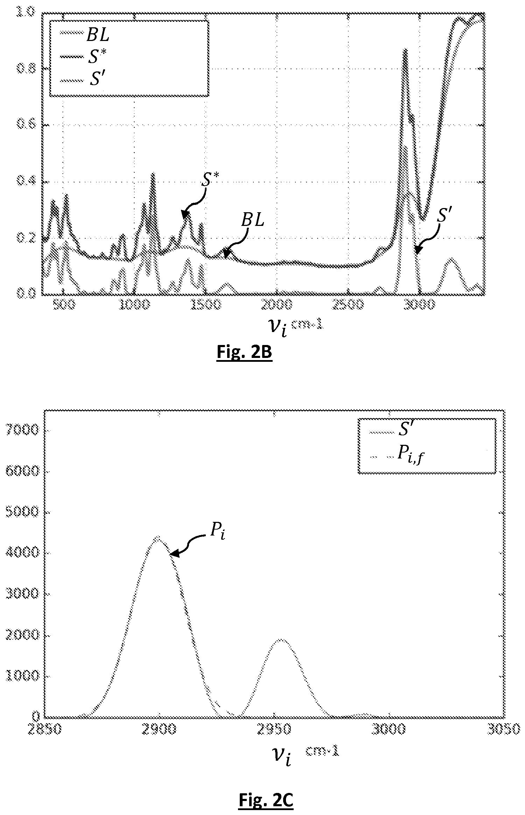

- un lissage du spectre $S$ acquis, par exemple par une application d'un filtre médian, pouvant être suivi d'une application d'un filtre de type Savitsky-Golay. Cela permet d'obtenir un spectre lissé $S^*$, représenté sur la figure 2B ;
- une extraction d'une ligne de base $BL$ du spectre. La ligne de base $BL$ peut être obtenue par application d'un filtre de Clayton au spectre $S$ acquis ;
- une soustraction de la ligne de base au spectre lissé, de façon à obtenir un spectre traité $S' = S^* - BL.$

Sur la figure 2B, on a représenté le spectre lissé *S\**, la ligne de base *BL* ainsi que le spectre traité *S'* résultants du spectre *S* acquis et représenté sur la figure 2A.

Une région d'intérêt du spectre traité est ensuite sélectionnée. Dans l'application citée en exemple, relative au suivi de l'hydrolyse de l'amidon, la région d'intérêt considérée est comprise entre 2850 cm$^{-1}$ et 3050 cm$^{-1}$. La figure 2C représente la région d'intérêt sélectionnée. Elle comporte trois pics : le premier pic s'étendant autour de 2900 cm$^{-1}$, le deuxième pic s'étendant autour de 2950 cm$^{-1}$ et le troisième pic s'étendant autour de 2985 cm$^{-1}$, dont l'amplitude est très faible.

Dans la suite de la description, on s'intéresse dans un premier temps au premier pic, dit pic d'intérêt $P_i$, dont on cherche à déterminer une position $v_i$. Par position, on entend une coordonnée représentative du pic selon l'axe des abscisses, c'est-à-dire l'axe représentant le nombre d'onde. Il est usuel de considérer la position du sommet du pic. D'autres positions peuvent être considérées, par exemple une moyenne (ou barycentre) du pic, une médiane ou une borne supérieure ou une borne inférieure. Dans le domaine du traitement de spectres, il est usuel de déterminer la position d'un pic en réalisant un ajustement paramétrique de la forme du pic par rapport à une fonction d'ajustement paramétrique, par exemple une fonction statistique de type gaussienne. L'étape d'ajustement est fréquemment désignée par le terme anglosaxon "fit". Elle consiste à déterminer les paramètres de la fonction d'ajustement s'approchant le plus de la forme du pic. S'agissant d'une gaussienne, les paramètres déterminés sont la moyenne $\mu$, l'écart type $\sigma$, ainsi que l'amplitude. La position du pic est obtenue en fonction des paramètres de la gaussienne, en particulier la moyenne $\mu$ indiquant la position du sommet du pic. Le terme pic ajusté désigne le pic obtenu après ajustement par la fonction d'ajustement prise en compte. L'ajustement peut être réalisé en considérant une autre fonction statistique, par exemple une lorentzienne. La fonction d'ajustement peut être une fonction polynomiale, ou une forme prédéterminée, par exemple une forme triangulaire ou une forme trapézoïdale. L'ajustement permet de déterminer une position $v_i$ du pic d'intérêt $P_i$.

La figure 2C montre le pic d'intérêt $P_i$ du spectre traité *S'*, évoqué en lien avec la figure 2B, en trait plein, ainsi qu'un ajustement $P_{i,f}$ du pic d'intérêt par une gaussienne, en pointillés.

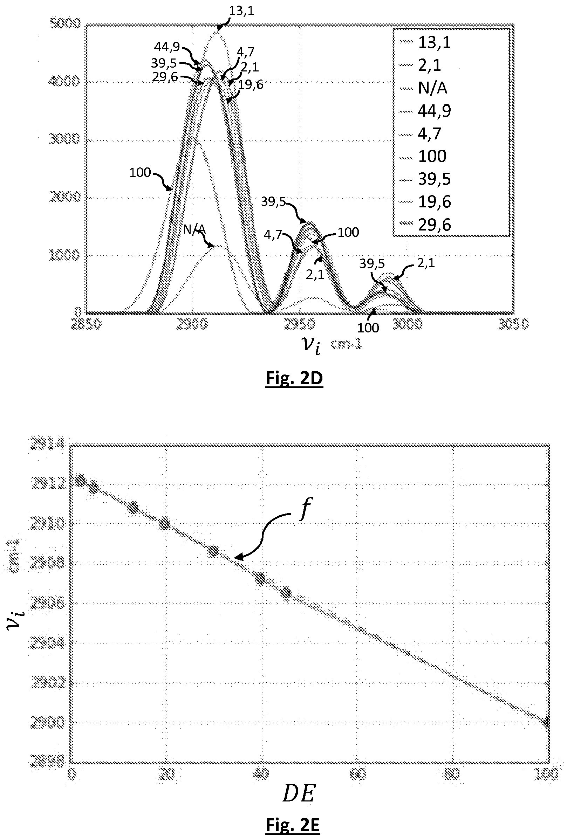

Les inventeurs ont utilisé différents échantillons, présentant respectivement différents index équivalent dextrose (DE), ces index étant compris entre 2.1 et 100. La figure 2D montre les spectres traités *S'* dans la région d'intérêt considérée. Plus précisément, sur la figure 2D, on a référencé le pic d'intérêt $P_i$ pour chaque échantillon, à chaque pic correspondant un index équivalent dextrose DE. Une courbe, référencée N/A, correspond à un échantillon dont l'équivalent dextrose est inconnu.

Un élément important de l'invention résulte de l'observation selon laquelle plus l'index équivalent dextrose DE augmente, plus la position $v_i$ du centre du pic d'intérêt se décale vers les faibles nombres d'onde. Elle est voisine de 2900 cm$^{-1}$ lorsque DE = 100%, et se rapproche progressivement de 2912 cm$^{-1}$ lorsque DE tend vers 2%. Ainsi, du fait de ce décalage progressif, la position $v_i$ du pic d'intérêt $P_i$ sur le spectre constitue un indicateur fiable de l'index DE de l'échantillon analysé.

La figure 2D montre qu'un autre paramètre, par exemple l'amplitude du pic d'intérêt, semble évoluer de façon plus indépendante de l'index DE et ne constitue pas un bon indicateur de l'index DE.

La position $v_i$ du centre des différents pics d'intérêt représentés sur la figure 2D a été précisément déterminée en mettant en œuvre un ajustement gaussien. La figure 2E représente l'évolution de cette position (axe des ordonnées) en fonction de l'index DE (axe des abscisses). Cette évolution est, au moins au premier ordre, linéaire, d'équation :

$$v_i = a \times DE + b \text{ avec } a = \text{-0.1257 et } b = 2{,}912 \ 10^3. \ (1)$$

On peut également déterminer l'évolution de l'index DE en fonction de la position $v_i$ du pic : $DE = c \times v_i + d$ (1) , avec c = -7,957 et d = 2,317 10$^4$. (2)

Cela montre qu'il existe une relation bijective entre la position $v_i$ du pic d'intérêt sur le spectre, c'est-à-dire le nombre d'onde représentatif du pic, et l'index DE. Cette relation est valable pour une certaine teneur en matière sèche, correspondant à la teneur de matière sèche des échantillons utilisés pour établir la relation. La mesure de la position du pic permet donc une estimation de l'index DE de l'échantillon. Par relation bijective, on entend qu'à une valeur de DE correspond une seule valeur de nombre d'onde, et réciproquement.

L'évolution de la position $v_i$ du pic d'intérêt peut également être constatée sur le pic du spectre Raman s'étendant entre 2940 cm$^{-1}$ et 2980 cm$^{-1}$. Sur la figure 2D, on a repéré les pics, dans la bande spectrale 2940 cm$^{-1}$ et 2980 cm$^{-1}$, correspondant respectivement à des index DE de 2,1 - 4,7 - 39,5 et 100. On observe à nouveau un décalage progressif du pic, vers les faibles nombres d'onde, lorsque l'index DE augmente.

La même conclusion peut être tirée de l'observation du décalage progressif du pic Raman s'étendant dans la bande spectrale 2980 cm$^{-1}$ - 3010 cm$^{-1}$. Sur la figure 2D, on a repéré les pics, dans la bande spectrale 2980 cm$^{-1}$ - 3010 cm$^{-1}$, correspondant respectivement à des index DE de 2,1- 39,5 et 100. On observe à nouveau un décalage progressif du pic, vers les faibles nombres d'onde, lorsque l'index DE augmente.

Ainsi, l'évolution de la position $v_i$ du pic en fonction de l'index DE affecte plusieurs pics d'intérêt du spectre Raman.

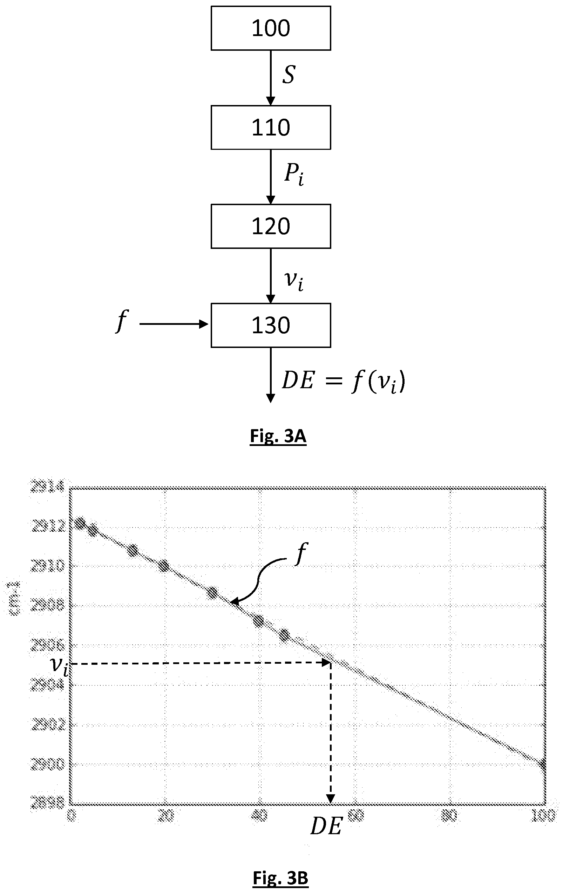

L'expression (2) décrite en lien avec la figure 2E constitue une fonction de calibration f, établie à la base d'échantillons dont l'index DE est maîtrisé. Elle peut être utilisée pour déterminer l'index DE d'un échantillon inconnu, à partir d'une position $v_i$ d'un pic d'intérêt $P_i$ d'un spectre Raman. Ainsi, l'invention permet de déterminer l'index DE d'un échantillon inconnu selon les étapes suivantes, décrites en lien avec la figure 3A.

Etape 100 : acquisition d'un spectre Raman de l'échantillon. Il s'agit d'obtenir un spectre Raman $S$ de l'échantillon, par exemple à partir du dispositif décrit en lien avec la figure 1. Il est possible d'acquérir successivement plusieurs spectres Raman, ces derniers étant ensuite additionnés pour former un spectre Raman $S$ représentatif de l'échantillon.

Etape 110 : sélection d'un pic d'intérêt $P_i$, dans une bande spectrale d'intérêt $\Delta\lambda_i$ connue a priori. Dans cet exemple, la bande spectrale est comprise entre 2850 cm$^{-1}$ et 2940 cm$^{-1}$.

Etape 120 : détermination d'une position $v_i$ du pic d'intérêt $P_i$. Cette étape peut être réalisée au moyen d'un traitement du spectre acquis suivi d'un ajustement du pic d'intérêt $P_i$ selon une fonction d'ajustement, comme préalablement décrit. La position $v_i$ peut être la position du sommet du pic, ou sa moyenne, ou sa médiane, ou une borne supérieure et/ou inférieure délimitant le pic.

Etape 130 : application d'une fonction de calibration, pour déterminer un degré de polymérisation, ou un index lié au degré de polymérisation, par exemple l'index DE, par application de la fonction de calibration. Ainsi, $DE = f(v_i)$, où $v_i$ est la position du pic d'intérêt déterminée lors de l'étape 120 et f est la fonction de calibration prise en compte. On peut également utiliser une fonction de calibration $g$, de telle sorte que $DP = g(v_i)$, DP désignant le degré de polymérisation et $g$ correspondant à une fonction de calibration reliant le position $v_i$ du pic d'intérêt $P_i$ au degré de polymérisation DP.

Par exemple, si on mesure une position $v_i$ = 2905 cm$^{-1}$, l'application de la fonction de calibration f permet d'aboutir à une estimation d'un index DE d'environ 59%, comme représenté sur la figure 3B par les flèches en pointillés.

La fonction de calibration f est de préférence obtenue en déterminant une évolution de la position du pic d'intérêt en mettant en œuvre des échantillons de calibration, dont les index respectifs *DE,* ou les degrés de polymérisation respectifs *DP,* sont distincts les uns des autres, et connus.

L'invention peut être mise en œuvre pour le suivi en ligne de l'hydrolyse de l'amidon. Généralement, l'hydrolyse de l'amidon, également désignée par le terme saccharification, est mise en œuvre dans l'industrie agroalimentaire dans des cuves de volume important. L'invention peut être appliquée à des prélèvements d'échantillons effectués dans une cuve, ou sur une dérivation de cette dernière. Elle permet une détermination en temps réel de l'index DE ce qui constitue un progrès notable par rapport aux méthodes d'analyses chimiques. L'invention est de plus aisément automatisable.

Les inventeurs ont observé que la relation établie entre l'index DE et la position $v_i$ du pic d'intérêt peut varier en fonction des paramètres expérimentaux, par exemple la température de l'échantillon. Aussi, de préférence, le dispositif comporte une unité de régulation de température 16, précédemment évoquée, pour maîtriser la température de l'échantillon. A défaut, la température de l'échantillon peut être mesurée et on applique une fonction de calibration tenant compte de la température mesurée. Le fait de tenir compte de la température, ou de la maîtriser, permet d'augmenter la précision de l'estimation du degré de polymérisation ou du degré d'équivalent Dextrose.

L'invention a été appliquée à la caractérisation du degré de polymérisation d'un polymère de type PVA (Polyvinyle d'alcool). Des polymères à l'état de poudre ont été dilués, de façon à obtenir un pourcentage de matière sèche de l'ordre de 7%. Les poudres ont été mélangées à de l'eau déionisée, puis soumise à des ultrasons pendant 20 heures de façon à améliorer leur solubilité. On a acquis 200 spectres Raman par échantillon. Sur chaque échantillon, les spectres ont été sommés de façon à obtenir un spectre moyen, considéré comme représentatif de l'échantillon. Le degré de polymérisation DP de chaque poudre est caractérisé par la masse molaire (mw - molar weight), le degré de polymérisation étant classiquement considéré comme dépendant de la masse molaire. On a utilisé trois échantillons dont les masses molaires respectives étaient 27000, 31000 et 130000 g.mol$^{-1}$.

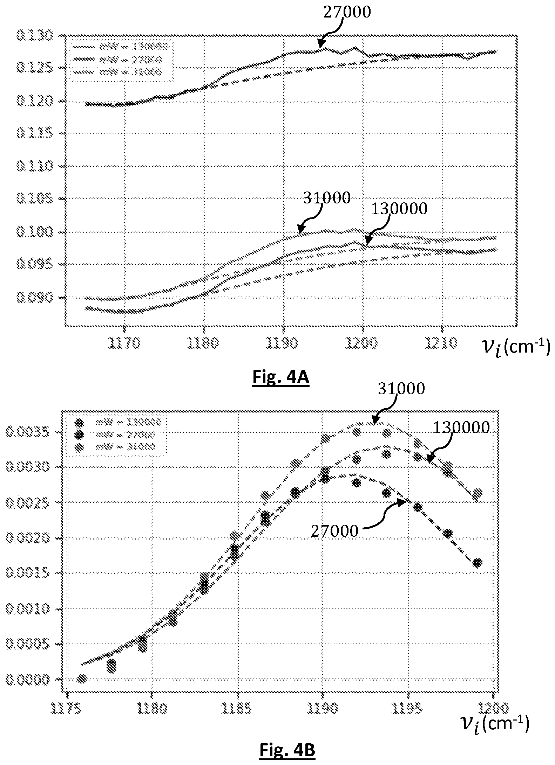

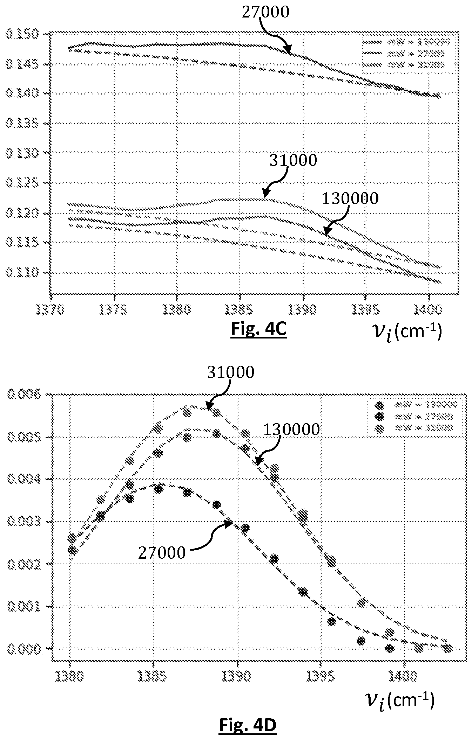

Les figures 4A et 4C représentent respectivement le spectre moyen dans deux régions d'intérêt : entre 1180 cm$^{-1}$ et 1200 cm$^{-1}$ (figure 4A) et entre 1380 cm$^{-1}$ et 1400 cm$^{-1}$ (figure 4C). Les spectres ont subi un traitement similaire à ceux précédemment décrits : lissage, extraction de la ligne de base et ajustement gaussien. Sur les figures 4A et 4C, les lignes de base sont représentées en pointillés.

Les figures 4B et 4D représentent respectivement les pics obtenus autour de 1190 cm$^{-1}$ et 1390 cm$^{-1}$, résultant des traitements effectués sur le spectre Raman. On observe un déplacement du centre du pic en fonction de la masse molaire wt. Le tableau 1 rassemble la position du sommet de chaque pic en fonction de la masse molaire (mw) :

Tableau 1

| mw | 27000 | 31000 | 130000 |
|---|---|---|---|
| 1180 cm$^{-1}$ et 1200 cm$^{-1}$ | 1191.52 | 1192.87 | 1193.65 |
| 1380 cm$^{-1}$ et 1400 cm$^{-1}$ | 1385.58 | 1387.53 | 1387.77 |

Plus la masse molaire est importante, plus la position du pic se décale vers les valeurs élevées de nombre d'onde.

L'invention peut être appliquée à d'autres polymères, de façon à déterminer un degré de polarisation DP en se basant sur une fonction de calibration f établie à l'aide d'échantillons dont le degré de polymérisation DP est connu, et permettant d'établir une relation, de préférence bijective, entre la position $v_i$ d'un pic d'intérêt $P_i$ et le degré de polymérisation DP.

L'invention pourra être mise en œuvre dans différentes applications, par exemple dans le domaine de l'agroalimentaire ou dans le domaine de l'industrie chimique. Elle pourra être utilisée sur des échantillons prélevés ou dans le contrôle en ligne de procédés.

**Revendications**

1. Procédé de détermination d'un degré de polymérisation (DP, DE) d'un polymère, contenu dans un échantillon, comportant les étapes suivantes:

   a) illumination de l'échantillon (2) à l'aide d'un faisceau laser (11) et obtention d'un spectre Raman représentatif de l'échantillon (S) ;
   b) identification d'un pic d'intérêt ($P_i$) et détermination d'une position ($v_i$) du pic d'intérêt sur le spectre Raman ;
   c) à partir de la position ($v_i$) du pic d'intérêt, utilisation d'une fonction de calibration ($f$) pour déterminer le degré de polymérisation (DP, DE) du polymère, la fonction de calibration traduisant une évolution de la position du pic d'intérêt en fonction du degré de polymérisation du polymère ;

   le procédé étant **caractérisé en ce que** le pic d'intérêt est situé dans une bande spectrale s'étendant entre 2800 cm$^{-1}$ et 3020 cm$^{-1}$.

2. Procédé selon la revendication 1, dans lequel la fonction de calibration établit une relation entre la position ($v_i$) du pic d'intérêt ($P_i$) et le degré de polymérisation (DP, DE) du polymère.

3. Procédé selon la revendication 1 ou la revendication 2, dans lequel la position ($v_i$) du pic d'intérêt ($P_i$) est une position d'un sommet du pic d'intérêt sur le spectre.

4. Procédé selon l'une quelconque des revendications précédentes, dans lequel l'étape b) comporte, préalablement à la détermination de la position du pic d'intérêt, un traitement du spectre Raman (S), comportant au moins l'une des opérations suivantes :

   - lissage du spectre Raman, pour obtenir un spectre Raman lissé ;
   - extraction d'une ligne de base *(BL)* et soustraction de cette dernière au spectre Raman ou du spectre Raman lissé ;
   - prise en compte d'une fonction d'ajustement paramétrique et ajustement du pic d'intérêt selon la fonction d'ajustement paramétrique ;

5. Procédé selon la revendication 4, dans lequel le traitement du spectre Raman comporte un ajustement du pic d'intérêt ($P_i$) au moyen d'une fonction d'ajustement statistique paramétrique de type gaussienne ou lorentzienne.

6. Procédé selon l'une quelconque des revendications précédentes, dans lequel le polymère est un polymère de glucose.

7. Procédé selon la revendication 6, dans lequel le polymère de glucose est un produit dérivé de l'hydrolyse de l'amidon, le procédé permettant un suivi de l'hydrolyse de l'amidon.

8. Procédé selon l'une quelconque des revendications 6 ou 7, dans lequel dans l'étape c), le degré de polymérisation est un index, dit équivalent dextrose (DE), représentant une quantité de dextrose présente dans l'échantillon sur une quantité de matière sèche présente dans l'échantillon.

9. Procédé selon la revendication 8, dans lequel la fonction de calibration est telle que plus l'équivalent dextrose (DE) augmente, plus la position du centre du pic d'intérêt se décale vers des faibles nombres d'onde.

10. Procédé selon l'une quelconque des revendications précédentes, dans lequel la fonction de calibration (*f*) est obtenue en mettant en œuvre les étapes a) et b) en utilisant successivement des échantillons de calibration dont le degré de polymérisation est connu.

**11.** Procédé selon l'une quelconque des revendications précédentes, dans lequel l'étape a) comporte une acquisition de plusieurs spectres Raman successifs, les spectres Raman successifs étant additionnés pour obtenir le spectre Raman ($S$) représentatif de l'échantillon.

**12.** Procédé selon l'une quelconque des revendications précédentes, dans lequel le pic d'intérêt est compris dans une bande spectrale s'étendant entre 2850 cm$^{-1}$ et 2940 cm$^{-1}$ et/ou entre 2940 cm$^{-1}$ et 2980 cm$^{-1}$, et/ou entre 2980cm$^{-1}$ et 3010 cm$^{-1}$.

**13.** Dispositif (1), pour déterminer un degré de polymérisation d'un polymère, le dispositif comportant :

- une source laser (10), configurée pour émettre un faisceau lumineux pour illuminer un échantillon (2) comportant le polymère ;
- un spectromètre (20), configuré pour acquérir un spectre Raman de l'échantillon sous l'effet de son illumination par le faisceau lumineux ;
- un processeur (22), configuré pour mettre en œuvre les étapes b) et c) d'un procédé selon l'une quelconque des revendications précédentes, à partir du spectre Raman acquis par le spectromètre ;

le procédé étant **caractérisé en ce que** lors de l'étape b), le pic d'intérêt est situé dans une bande spectrale s'étendant entre 2800 cm$^{-1}$ et 3020 cm$^{-1}$.

**14.** Dispositif selon la revendication 13, comportant une unité de régulation de la température (16) de l'échantillon (2), de façon à maintenir la température de ce dernier à une température de consigne.

**Patentansprüche**

**1.** Verfahren zur Bestimmung eines Polymerisationsgrades (DP, DE) eines Polymers, das in einer Probe enthalten ist, umfassend die folgenden Schritte:

a) Beleuchten der Probe (2) mithilfe eines Laserstrahls (11) und Erhalten eines für die Probe (S) repräsentativen Raman-Spektrums;
b) Ermitteln eines Peaks von Interesse ($P_i$) und Bestimmen einer Position ($v_i$) des Peaks von Interesse in dem Raman-Spektrum;
c) ausgehend von der Position ($v_i$) des Peaks von Interesse, Verwenden einer Kalibrierungsfunktion ($f$), um den Polymerisationsgrad (DP, DE) des Polymers zu bestimmen, wobei die Kalibrierungsfunktion einen Verlauf der Position des Peaks von Interesse in Abhängigkeit vom Polymerisationsgrad des Polymers zum Ausdruck bringt;

wobei das Verfahren **dadurch gekennzeichnet ist, dass** der Peak von Interesse in einem Spektralband liegt, das sich zwischen 2800 cm$^{-1}$ und 3020 cm$^{-1}$ erstreckt.

**2.** Verfahren nach Anspruch 1, bei dem die Kalibrierungsfunktion eine Beziehung zwischen der Position ($v_i$) des Peaks von Interesse ($P_i$) und dem Polymerisationsgrad (DP, DE) des Polymers herstellt.

**3.** Verfahren nach Anspruch 1 oder Anspruch 2, bei dem die Position ($v_i$) des Peaks von Interesse ($P_i$) eine Position eines Scheitelpunkts des Peaks von Interesse in dem Spektrum ist.

**4.** Verfahren nach einem der vorhergehenden Ansprüche, bei dem der Schritt b), vor dem Bestimmen der Position des Peaks von Interesse, eine Behandlung des Raman-Spektrums (S) umfasst, die mindestens einen der folgenden Vorgänge umfasst:

- Glätten des Raman-Spektrums, um ein geglättetes Raman-Spektrum zu erhalten;
- Extrahieren einer Basislinie (BL) und Subtrahieren von Letzterer von dem Raman-Spektrum oder von dem geglätteten Raman-Spektrum;
- Berücksichtigen einer parametrischen Anpassungsfunktion und Anpassen des Peaks von Interesse entsprechend der parametrischen Anpassungsfunktion;

5. Verfahren nach Anspruch 4, bei dem die Behandlung des Raman-Spektrums eine Anpassung des Peaks von Interesse ($P_i$) mittels einer parametrischen statistischen Anpassungsfunktion vom Gauß- oder Lorentz-Typ umfasst.

6. Verfahren nach einem der vorhergehenden Ansprüche, bei dem das Polymer ein Glucosepolymer ist.

7. Verfahren nach Anspruch 6, bei dem das Glucosepolymer ein Nebenprodukt der Hydrolyse der Stärke ist, wobei das Verfahren eine Überwachung der Hydrolyse der Stärke ermöglicht.

8. Verfahren nach einem der Ansprüche 6 oder 7, bei dem im Schritt c) der Polymerisationsgrad ein als Dextroseäquivalent (DE) bezeichneter Index ist, der für eine in der Probe vorhandene Dextrosemenge im Verhältnis zu einer in der Probe vorhandenen Trockenmassemenge steht.

9. Verfahren nach Anspruch 8, bei dem die Kalibrierungsfunktion dergestalt ist, dass sich die Position des Mittelpunkts des Peaks von Interesse, je mehr das Dextroseäquivalent (DE) zunimmt, umso mehr zu geringeren Wellenzahlen hin verlagert.

10. Verfahren nach einem der vorhergehenden Ansprüche, bei dem die Kalibrierungsfunktion ($f$) erhalten wird, indem die Schritte a) und b) durchgeführt werden, indem nacheinander Kalibrierungsproben mit bekanntem Polymerisationsgrad verwendet werden.

11. Verfahren nach einem der vorhergehenden Ansprüche, bei dem der Schritt a) eine Erfassung von mehreren aufeinanderfolgenden Raman-Spektren umfasst, wobei die aufeinanderfolgenden Raman-Spektren addiert werden, um das für die Probe repräsentative Raman-Spektrum (S) zu erhalten.

12. Verfahren nach einem der vorhergehenden Ansprüche, bei dem der Peak von Interesse in einem Spektralband enthalten ist, das sich zwischen 2850 cm$^{-1}$ und 2940 cm$^{-1}$ und/oder zwischen 2940 cm$^{-1}$ und 2980 cm$^{-1}$ und/oder zwischen 2980 cm$^{-1}$ und 3010 cm$^{-1}$ erstreckt.

13. Vorrichtung (1) zur Bestimmung eines Polymerisationsgrades eines Polymers, wobei die Vorrichtung umfasst:

- eine Laserquelle (10), die dazu ausgestaltet ist, einen Lichtstrahl auszusenden, um eine Probe (2) zu beleuchten, die das Polymer enthält;
- ein Spektrometer (20), das dazu ausgestaltet ist, ein Raman-Spektrum der Probe unter der Wirkung ihrer Beleuchtung mit dem Laserstrahl zu erfassen;
- einen Prozessor (22), der dazu ausgestaltet ist, die Schritte b) und c) eines Verfahrens nach einem der vorhergehenden Ansprüche ausgehend von dem vom Spektrometer erfassten Ramen-Spektrum durchzuführen;

wobei das Verfahren **dadurch gekennzeichnet ist, dass** beim Schritt b) der Peak von Interesse in einem Spektralband liegt, das sich zwischen 2800 cm$^{-1}$ und 3020 cm$^{-1}$ erstreckt.

14. Vorrichtung nach Anspruch 13, die eine Regelungseinheit für die Temperatur (16) der Probe (2) umfasst, so dass deren Temperatur auf einer Solltemperatur gehalten wird.

**Claims**

1. Method for determining a degree of polymerization (DP, DE) of a polymer, contained in a sample, comprising the following steps:

a) illuminating the sample (2) using a laser beam (11) and obtaining a Raman spectrum (5) representative of the sample;
b) identifying a peak of interest ($P_i$) and determining a position ($v_i$) of the peak of interest in the Raman spectrum;
c) on the basis of the position ($v_i$) of the peak of interest, using a calibration function ($f$) to determine the degree of polymerization (DP, DE) of the polymer, the calibration function expressing a variation in the position of the peak of interest as a function of the degree of polymerization of the polymer;

the method being **characterized in that** the peak of interest is located in a spectral band extending between 2800

cm$^{-1}$ and 3020 cm$^{-1}$.

2. Method according to Claim 1, wherein the calibration function establishes a relationship between the position ($v_i$) of the peak of interest ($P_i$) and the degree of polymerization (DP, DE) of the polymer.

3. Method according to Claim 1 or Claim 2, wherein the position ($v_i$) of the peak of interest ($P_i$) is a position of an apex of the peak of interest in the spectrum.

4. Method according to any one of the preceding claims, wherein step b) comprises, prior to the determination of the position of the peak of interest, processing the Raman spectrum (5), comprising at least one of the following operations:

   - smoothing the Raman spectrum, to obtain a smoothed Raman spectrum;
   - extracting a baseline (BL) and subtracting the latter from the Raman spectrum or from the smoothed Raman spectrum;
   - taking into account a parametric fitting function and fitting the peak of interest using the parametric fitting function.

5. Method according to Claim 4, wherein the processing of the Raman spectrum comprises fitting the peak of interest ($P_i$) by means of a parametric statistical fitting function of Gaussian or Lorentzian type.

6. Method according to any one of the preceding claims, wherein the polymer is a glucose polymer.

7. Method according to Claim 6, wherein the glucose polymer is a product derived from the hydrolysis of starch, the method allowing the hydrolysis of the starch to be monitored.

8. Method according to either one of Claims 6 and 7, wherein, in step c), the degree of polymerization is an index, called the dextrose equivalent (DE), representing an amount of dextrose present in the sample over an amount of dry matter present in the sample.

9. Method according to Claim 8, wherein the calibration function is such that the more the dextrose equivalent (DE) increases, the more the position of the centre of the peak of interest shifts towards lower wavenumbers.

10. Method according to any one of the preceding claims, wherein the calibration function ($f$) is obtained by implementing steps a) and b) using, successively, calibration samples the degree of polymerization of which is known.

11. Method according to any one of the preceding claims, wherein step a) comprises acquiring a plurality of successive Raman spectra, the successive Raman spectra being added to obtain the Raman spectrum ($S$) representative of the sample.

12. Method according to any one of the preceding claims, wherein the peak of interest is comprised in a spectral band extending between 2850 cm$^{-1}$ and 2940 cm$^{-1}$ and/or between 2940 cm$^{-1}$ and 2980 cm$^{-1}$, and/or between 2980 cm$^{-1}$ and 3010 cm$^{-1}$.

13. Device (1) for determining a degree of polymerization of a polymer, the device comprising:

   - a laser source (10), configured to emit a light beam in order to illuminate a sample (2) comprising the polymer;
   - a spectrometer (20), configured to acquire a Raman spectrum of the sample under the effect of its illumination by the light beam;
   - a processor (22), configured to implement steps b) and c) of a method according to any one of the preceding claims, on the basis of the Raman spectrum acquired by the spectrometer;

   the method being **characterized in that**, in step b), the peak of interest is located in a spectral band extending between 2800 cm$^{-1}$ and 3020 cm$^{-1}$.

14. Device according to Claim 13, comprising a unit (16) for regulating the temperature of the sample (2), so as to keep the temperature of the latter at a setpoint temperature.

**Fig. 1**

$$v_i{}^{cm-1}$$

**Fig. 2A**

**Fig. 2B**

**Fig. 2C**

**Fig. 2D**

**Fig. 2E**

**Fig. 3A**

**Fig. 3B**

**Fig. 4A**

**Fig. 4B**

**Fig. 4C**

$\nu_i(cm^{-1})$

**Fig. 4D**

$\nu_i(cm^{-1})$

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0451811 A
- US 6723804 B
- WO 2012088217 A

**Littérature non-brevet citée dans la description**

- **DROPSIT E et al.** On the exploitation of optical signal from Raman spectroscopy for in-situ conversion monitoring of emulsion polymerization. *AIP conférence proceedings,* 14 Décembre 2017, vol. 1914, 090006